# EUROPEAN PATENT SPECIFICATION

(11) **EP 1 265 219 B1**
(45) Date of publication and mention of the grant of the patent: **27.04.2005**
(21) Application number: 01958568.6
(22) Date of filing: 28.08.2001
(51) Int. Cl.: G09G 5/00, G09G 5/02, H04N 9/64, H04N 5/74, H04N 9/73, G09G 5/06

(54) **ENVIRONMENT ADAPTIVE IMAGE DISPLAY SYSTEM, IMAGE PROCESSING METHOD AND INFORMATION STORING MEDIUM**
SICH AN DIE UMGEBUNG ANPASSENDES ANZEIGESYSTEM, BILDVERARBEITUNGSVERFAHREN UND BILDSPEICHERMEDIUM
SYSTEME D'AFFICHAGE D'IMAGE S'ADAPTANT A L'ENVIRONNEMENT, PROCEDE DE TRAITEMENT D'IMAGE ET SUPPORT DE MEMORISATION D'INFORMATIONS

(30) Priority: 28.08.2000 JP 2000257161
(43) Date of publication of application: 11.12.2002
(73) Proprietor: SEIKO EPSON CORPORATION, Tokyo 160-0811 (JP)
(72) Inventor: WADA, Osamu, c/o SEIKO EPSON CORPORATION, Suwa-shi, Nagano 392-8502 (JP); FUKASAWA, Kenji, c/o SEIKO EPSON CORPORATION, Suwa-shi, Nagano 392-8502 (JP); KANAI, Masashi, c/o SEIKO EPSON CORPORATION, Suwa-shi, Nagano 392-8502 (JP); MATSUDA, Hideki, c/o SEIKO EPSON CORPORATION, Suwa-shi, Nagano 392-8502 (JP)
(74) Representative: Hoffmann, Eckart, Dipl.-Ing.
(86) International application number: PCT/JP2001/007376
(87) International publication number: WO 2002/019307

(56) References cited:
- GB-A- 2 335 326
- GB-A- 2 341 033
- JP-A- 11 316 566
- JP-A- 2001 060 082
- US-A- 5 315 378
- US-A- 5 803 570
- US-A- 5 870 069
- PATENT ABSTRACTS OF JAPAN vol. 2000, no. 02, 29 February 2000 (2000-02-29) & JP 11 316566 A (PIONEER ELECTRON CORP), 16 November 1999 (1999-11-16)

## Description

### TECHNICAL FIELD

The present invention relates to an image display system and an image processing method.

### BACKGROUND OF ART

GB-A-2 341 033 discloses a device and method for automatically adjusting the brightness, contrast and color temperature of a display according to the brightness and color temperature of ambient light, and according to individual preferences by taking into account the brightness and color temperature initially set by a user. A photo sensor is used to detect the environmental illumination and a micro processor utilizes the detected data to appropriately adjust at least one of brightness, contrast and color temperature with respect to a user preference.

US-A-5,315,378 discloses an image display system according to the pre-characterizing portion of claim 1. In this prior art, a gamma correction and white balance adjustment device has a calculator for calculating brightness target values expected to be produced on a screen in response to calculated input signals to be applied to a CRT. The calculated input signals are actually applied to the CRT and the actual brightness values observed on the screen are measured. A table of a list of the calculated input signals expected to produce the brightness target values and a corresponding list of measured input signals which actually produced the calculated brightness target values is formed. An amplitude conversion circuit is provided for converting the amplitude of the input signal, which is equal to the calculated input signal, to that of the measured input signal in accordance with the obtained table.

GB-A-2 335 326 also discloses an image displaysystem according to the pre-characterizing portion of claim 1. More particularly, this prior art relates to a color management system (CMS) for correcting the differences of colors of images of the same picture among different image display apparatus displaying it. The color signals representing an input image to be displayed or printed are first converted into common color space signals using a first profile specific to the device that generated the color signals. These signals then undergo a second conversion on the basis of second profile representing the characteristics of the monitor device used to display the input image. The profiles are obtained before and stored as tables. The second profile is corrected on the basis of the viewing environment of the monitor that indicates XYZ color values of the ambient light.

Hence, there have been proposed image display systems of environment-compliant type which detect a viewing environment (or work environment) effected by ambient light and the like and correct an image taking the viewing environment into consideration.

However, the real desirable image may be seen differently depending on individuals or in areas. For example, the standard display mode in Japan is NTSC, but the standard display mode in Europe is PAL. Therefore, if an image generated assuming NTSC in Japan is displayed for Europeans in Europe, the way in which the displayed image is seen may be different from what Europeans think to be desirable.

### DISCLOSURE OF INVENTION

It is an object of the present invention to provide an image display system and an image processing method which can reproduce an input image so as to conform to an image characteristic selected by a user.

This object is achieved by an image display system and an image processing method as claimed in claims 1 and 4, respectively. Preferred embodiments of the invention are subject-matter of the dependent claims.

According to the present invention, an image suiting the taste of a user can be displayed by correcting the image information so that the image will be displayed conforming to the image characteristic selected by the user. In such an arrangement, the display device performs the calibration, without inputting a calibration image from any external input device such as a PC or the like into the display device, because the calibration image is generated by the display device itself.

### BRIEF DESCRIPTION OF DRAWINGS

Fig. 1 is a schematic illustration of an image display system according to an example of this embodiment.
Fig. 2 is a functional block diagram of an image processing section in a conventional projector.
Fig. 3 is a functional block diagram of an image processing section in a projector according to an example of this embodiment.
Fig.4 is a flow chart showing a procedure of image processing according to an example of this embodiment.

### BEST MODE FOR CARRYING OUT THE INVENTION

The description below relates to a case in which the present invention is applied to an image display system which uses a liquid-crystal projector, with reference to the accompanying figures. Note that the embodiments described herein do not in any way limit the scope of the invention as defined by the claims. Similarly, the entirety of the configuration described for these embodiments does not place any limitations on the essential components of the means in accordance with the present invention, as laid out herein.

### Description of Overall System

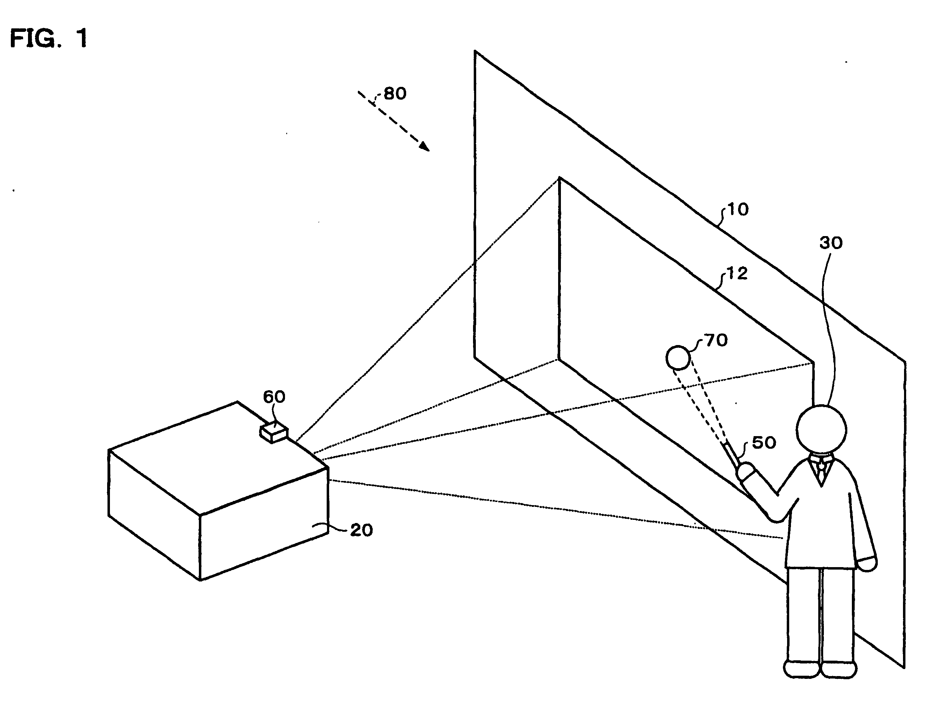

A schematic illustrative view of an image display system in accordance with an example of this embodiment of the present invention is shown in Fig. 1.

A projector 20, which is a projector-type display device provided substantially facing a screen 10, projects a given image for presentation. A presenter 30 gives a presentation to an audience, while using a light spot 70 projected from a laser pointer 50 to point at a desired position of an image in an image display region 12, which is a display area on the screen 10.

During such a presentation, the way in which images on the image display region 12 are seen will vary greatly, depending on factors such as the type of the screen 10 and ambient light 80. When the projector 20 displays the same white, for example, the type of the screen 10 could make it seem to be white with a yellow cast or white with a blue cast. Similarly, differences in the ambient light 80 could make the same white that is displayed by the projector 20 appear to be a bright white or a dull white.

In recent years, this projector 20 has become smaller and easier to transport. For that reason, it has become possible for the presenter 30 to perform presentations at a client's location, by way of example, but it is difficult to adjust colors to match the environment at the client's location and the manual adjustment of colors at the client's location takes too much time.

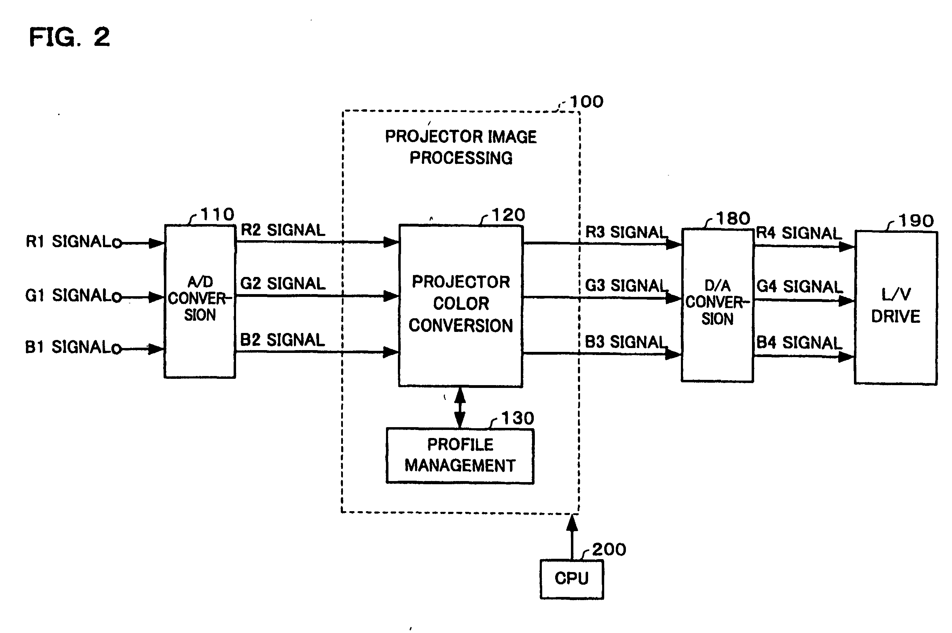

A functional block diagram of the image processing section within a conventional projector is shown in Fig. 2.

This conventional projector inputs an R1 signal, a G1 signal, and a B1 signal, which form RGB signals in analog format sent from a PC or the like, to an A/D conversion section 110 and then the input signals are color-converted into digital format of an R2 signal, a G2 signal, and a B2 signal by a projector image processing section 100.

An R3 signal, a G3 signal, and a B3 signal that have been subjected to the color conversion are input to a D/A conversion section 180, and an R4 signal, a G4 signal, and a B4 signal that have been converted into analog form are input to a light valve (L/V) drive section 190, to drive a liquid-crystal light valve and thereby display an image.

The projector image processing section 100, which is controlled by a CPU 200, comprises a projector color conversion section 120 and a profile management section 130.

The projector color conversion section 120 converts the RGB digital signals (the R2 signal, G2 signal, and B2 signal) from the A/D conversion section 110 into RGB digital signals for projector output (the R3 signal, G3 signal, and B3 signal), based on a projector input-output profiles that are managed by the profile management section 130. Note that "profile" in this case refers to characteristic data.

In this manner, the conventional projector can only perform color conversion based on input-output profiles that indicate input-output characteristics which are specific to that particular projector, and thus no consideration is paid to the viewing environment in which the image is projected and displayed.

However, it is difficult to ensure that the color appearance(s) is uniform with this configuration, without taking the viewing environment into account. The color appearance(s) is determined by three factors: light, the reflection or transmission of light by objects, and vision.

This embodiment implements an image display system which can reproduce an appropriate color by detecting the viewing environment of light including the reflection or transmission of light by object.

By the way, the color which is considered to be appropriate may be variable depending on the user or the area in which the color is to be reproduced.

For example, when the projector 20 is used in Japan, it is considered that the user generally desires the reproduction of image color through the NTSC mode. However, when the projector 20 is used in Europe, it is expected that the user generally desires the reproduction of image color through the PAL mode.

In such a case, the image color required by the user must be reproduced without dependent on the area in which the projector 20 is to be used.

This embodiment forms the projector 20 so that it can adjust the image color depending on the image display mode selected by the user.

More particularly, as shown in Fig. 1, this embodiment provides a color light sensor 60 functioning as viewing environment detection means which detects the viewing environment. The viewing environment information from the color light sensor 60 is inputs to the projector 20. The color light sensor 60 measures the viewing environment information of the image display region 12 in the screen 10 (more particularly, RGB or XYZ tristimulus values).

The projector 20 is provided with means which corrects image display information used for image display, based on selected information such as the viewing environment information from the color light sensor 60 and the image display mode selected by the user.

This embodiment implements an image display system which can reproduce an appropriate image color suiting the taste of a user by detecting the viewing environment based on the viewing environment information and then detecting the taste of a user based on the selected information.

A description will be made of a functional block relating to the image processing section in the projector 20, including these correction means or the like.

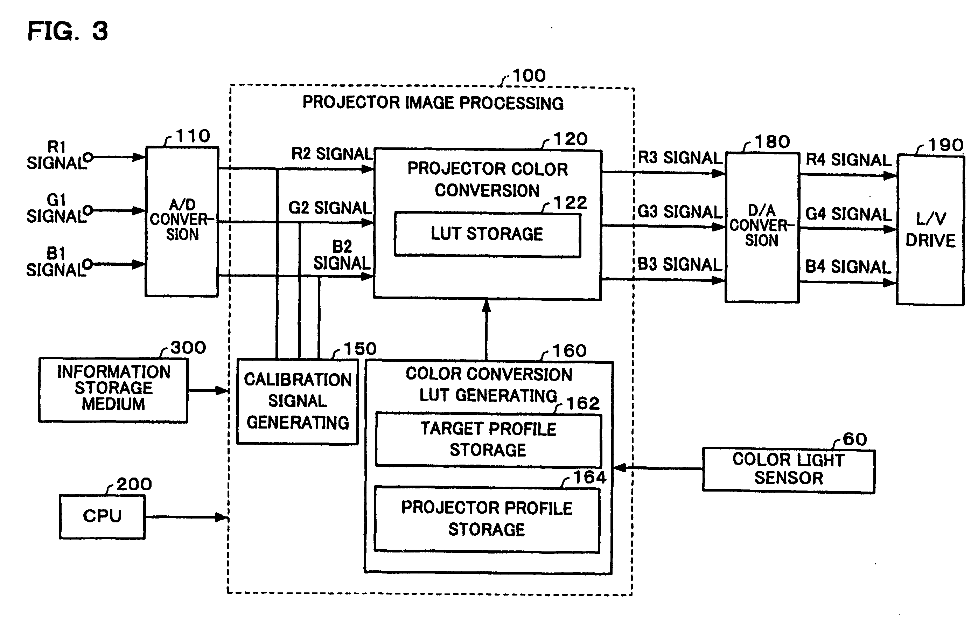

Fig. 3 is a functional block diagram of an image processing section in a projector 20 according to this embodiment.

In the projector 20, R1 G1 and B1 signals forming analog RGB signals from PC or the like are input into the A/D conversion section 110. The input signals are color-converted into Digital R2, G2 and B2 signals by the projector image processing section 100 which is controlled by CPU 200.

The projector 20 then inputs the color-converted R3, G3 and B3 signals into the D/A conversion section 180 and the analog-converted R4, G3 and B4 signals into L/V (light valve) drive section 190 which in turn drives the liquid crystal light valve to project the image.

The arrangement described hitherto is not different from that of the conventional projector. The projector image processing section 100 in the projector 20 according to this embodiment comprises a projector color conversion section 120, a target profile storage section 162, a projector profile storage section 164 (which is equivalent to the profile management section 130), a color conversion LUT generating section 160, an LUT storage section 122 and a calibration signal generating section 150.

The calibration signal generating section 150 generates calibration image signals. These calibration image signals are input into the projector color conversion section 120 as digital R2, G2 and B2 signals, as in the signals output from the A/D conversion section 110.

The projector color conversion section 120 refers to the projector profile managed by the projector profile storage section 164 for the respective digital RGB signals (R2, G2 and B2 signals) which are in turn converted into digital RGB signals (R3,G3 and B3 signals) appropriate for projector output.

The projector color conversion section 120 comprises an LUT storage section 122 which has stored a look-up table (LUT) that forms part of the image display information.

More particularly, the LUT storage section 122 has stored a one-dimensional look-up table (1D-LUT) to be used for brightness correction and a three-dimensional look-up table (3D-LUT) to be used for color correction.

The look-up tables 1D-LUT includes a gamma table and a color balance table while the look-up table 3D-LUT including a color gamut correction table and a color temperature correction table.

By using the look-up table 3D-LUT for color correction, the color compression, color expansion and the like, which would not easily be accomplished by the look-up table 1D-LUT, can be controlled to reproduce an accurate color. Thus, the color can more appropriately be reproduced by independently managing the brightness correction look-up table 1D-LUT and color correction look-up table 3D-LUT.

In this embodiment, furthermore, the projector image processing section 100 is provided with the color conversion LUT generating section 160 which corrects the LUT in the LUT storage section 122 based on the viewing environment information and the like from the color light sensor 60.

The color conversion LUT generating section 160 comprises a target profile storage section 162 and a projector profile storage section 164. More particularly, the color conversion LUT generating section 160 corrects the LUT in the LUT storage section 122 based on the target profile selected by the user, the viewing environment information and projector profile from the color light sensor 60 so that the way in which image color is seen will suit the taste of a user and also the viewing environment.

The target profile is a kind of input/output characteristic data of a color that should be targeted. A plurality of target profiles will be provided depending on the characteristics in plural kinds of images which can be selected by the user.

More particularly, the target profile may be data indicating RGB luminance signals and tristimulus values (X, Y, Z) correlated with these RGB luminance signals. In other words, the target profile defines the correlation between the RGB luminance signals and the tristimulus values (X, Y, Z). In this embodiment, the target profile storage section 162 is implemented using a memory which has stored the target profiles.

The projector profile is a kind of input/output characteristics data corresponding to the type of the projector 20.

More particularly, the projector profile may be data defining the relationship between the RGB luminance signals and the tristimulus values (X, Y, Z) which are obtained when the projector 20 actually displays the RGB luminance signals under an ideal environment. In this embodiment, the projector profile storage section 164 is implemented using a memory which has stored the projector profiles.

In such a manner, a presentation image can be displayed after it has appropriately been corrected to suit the taste of a user and the viewing environment by correcting the LUT for each gray scale.

### Explanation of Processing Flows

The flows of image processing in connection with the respective aforementioned sections will be described with reference to a flowchart.

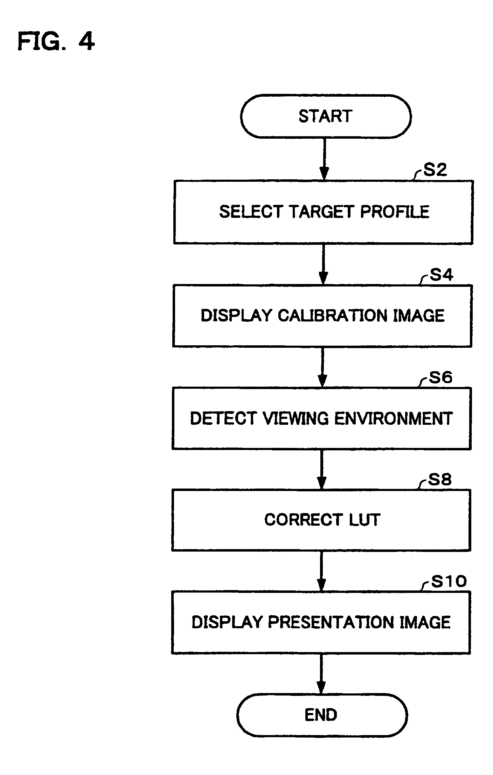

Fig. 4 is a flowchart showing a procedure of image processing according to an example of this embodiment.

First of all, a target profile selection image is displayed on the screen 10 through the projector 20 prior to the presentation. The selection image shows an image for selecting either of NTSC, PAL or SECAM.

The user then selects one image characteristic from plural kinds of image characteristics which have been assigned to operation buttons on the projector 20. More particularly, a plurality of selection buttons for selecting various image characteristics such as NTSC, PAL, SECAM and so on are provided on the outside of the projector 20. The user pushes one of these selection buttons to select one of the image characteristics.

This selection information is transmitted to the projector image processing section 100 which in turn uses the received selection information to turn on the flag of a target profile selected from a plurality of target profiles in the target profile storage section 162.

In this way, the projector image processing section 100 selects the target profile depending on the selection by the user (step S2).

After the target profile has been selected depending on the user's selection, the projector 20 causes the calibration signal generating section 150 to generate calibration signals (R2, G2, B2).

The calibration signal generating section 150 outputs these calibration signals toward the projector color conversion section 120.

The projector color conversion section 120 uses the default (initial) LUT stored in the LUT storage section 122 to convert the calibration signals into digital RGB signals (R3, G3, B3) to output.

The D/A conversion section 180 converts the digital RGB signals into analog RGB signals (R4, G4, B4). The L/V drive section 190 drives the liquid crystal light valve based on the analog RGB signals (R4, G4, B4). Moreover, the projector 20 projects the calibration image onto the image displaying region 12 (step S4).

While the calibration image is being displayed on the image displaying region 12, the color light sensor 60 detects tristimulus values in order to detect the viewing environment (step S6).

The color conversion LUT generating section 160 corrects the LUT in the LUT storage section 122 to reproduce a target color, based on the target profile selected from the target profile storage section 162, the projector profile stored in the projector profile storage section 164 and the tristimulus values detected by the color light sensor 60 (step S8).

More particularly, the color conversion LUT generating section 160 generates a gamma correction table, a white balance correction table, a color gamut correction table and a color temperature table in the LUT storage section 122, all of which tables suit the reproduction of the target color.

Actually, the procedure from the calibration image display step (S2) to the LUT correction step (S8) is carried out for a given gray scale unit (e.g., 16 gray scales).

In this way, the projector 20 displays calibration images for all the gray scales and generates an LUT corresponding for each gray scale.

After the LUTs corresponding to all the gray scales have been generated, the projector 20 displays an actual presentation image (step S10). On displaying the presentation image, the projector 20 uses the LUTs that were adjusted corresponding to the image characteristic (or target profile) selected by the user in the LUT storage section 122 and to reproduce the image reflecting the viewing environment.

As described, this embodiment correcting the LUTs to display the image which conforms to the image characteristic selected by the user.

Thus, this embodiment can implement the image display system which can display the image suiting taste of a user.

In addition, this embodiment uses the color light sensor 60 to detect the viewing environment so that the image can be projected and displayed taking the viewing environment into consideration.

As a result, this embodiment can display the image complying to the viewing environment at the time of display and can display the same image by absorbing the difference between various display environments irrespective of the applied environment. Therefore, this embodiment can rapidly reproduce substantially the same color at a plurality of different places.

### Description of Hardware

Note that the hardware described below by way of example can be used to implement the above described components.

For example, the configuration could be implemented by an A/D converter or the like as the A/D conversion section 110; a D/A converter or the like as the D/A conversion section 180; a liquid-crystal light valve driver as the L/V drive section 406; an image processing circuit and ASIC or the like as the projector color conversion section 120 and the color conversion LUT generating section 160; and circuitry having a storage area such as RAM or the like as the LUT storage section 122, the target profile storage section 162 and the projector profile storage section 164. Note that these portions may be implemented in a hardware fashion by circuitry, or they may be implemented in a software fashion by drivers.

In addition, the functions of the components shown in Fig. 3 may be implemented by reading out a program from an information storage medium 300. The information storage medium 300 could be a CD-ROM, DVD-ROM, ROM, RAM, or HDD, by way of example, and the method of reading the program therefrom could be a direct method or an indirect method.

Instead of the information storage medium 300, it is possible to implement the above described functions by downloading a program that implements those functions from a host device or the like over a transfer path. In other words, a program for implementing these functions may be embodied over carrier waves.

The hardware described below may be employed for the color light sensor 60.

For example, the color light sensor 60 may be implemented by using a color filter that selectively passes the tristimulus values, a photodiode, an A/D converter that converts analog signals from the photodiode into digital signals and an OP amp that amplifies the digital signals.

Note the present invention has been described above by way of an embodiment thereof, but the application of the present invention is not limited to the above embodying example.

### Modifications

For example, the target profile may be any other image characteristic such as RGB, sRGB or the like, than the image display modes such as NTSC and so on.

The viewing environment detection means may be any other suitable image capturing means such as CCD camera, CMOS camera or the like, rather than the color light sensor 60.

Although the screen 10 has been described as to the reflection type, but it may be of transmission type.

The present invention can also be applied to presentations in which images are displayed by a display means other than a projection means such as the above described projector. Apart from a liquid-crystal projector, this display means could be a display device such as a cathode ray tube (CRT), a plasma display panel (PDP), a field emission device (FED), an electro-luminescence (EL) device, or a direct-view type of liquid crystal display device, or a projector using a digital micromirror device (DMD), by way of example. Note that DMD is a tradename registered by Texas Instruments Inc., of the US. In addition, the projector is not limited to a front-projection-type device; it may equally well be of a rear-projection type.

In addition to presentations, this invention is also effective in the display of images such as those at meetings, during medical treatment, in the design and fashion fields, business activities, commercials, and education, as well as general-purpose images such as those in movies, TV, videos, and games.

Note that the functions of the above-described projector image processing section 100 of the projector 20 may be implemented by a single image display device (such as the projector 20 itself) or by distribution between a plurality of processing devices (such as distributed processing between the projector 20 and a PC).

## Claims

1. An image display system adapted to receive image information representing an input image to be displayed in a display area (12), to correct the image information and to display the input image based on the corrected image information, the image display system comprising:
calibration image generation means (150) for generating a calibration image;
image display means (190) for displaying the input image and the calibration image; and
viewing environment detection means (60) for detecting the tristimulus values of the calibration image displayed in the display area (12) as viewing environment information;
**characterized by**
selection input means, responsive to user input to select, as an image characteristic, at least one of a TV standard and a color signal type, the TV standard including NTSC, PAL and SECAM and the color signal type including RGB and sRGB; and
correction means (160) for correcting the image information based on the viewing environment information and the selected image characteristic.

2. The image display system as defined by claim 1, wherein the image display system is a projector type display device.

3. The system as defined by claim 2, further comprising:
conversion means (120) for converting the image information, the conversion means including a color correction look-up table and a brightness correction look-up table,
wherein the image display means is adapted to display the input image based on the converted image information, and
wherein the correction means (160) is adapted to individually correct the color correction look-up table and brightness correction look-up table based on the viewing environment information and the selected image characteristic.

4. An image processing method comprising:
a) generating a calibration image;
b) displaying the calibration image in a display area (12);
c) detecting the tristimulus values of the calibration image displayed in the display area (12) as viewing environment information;
d) receiving image information representing an input image to be displayed in the display area (12);
e) correcting the image information; and
f) displaying the input image based on the corrected image information;
**characterized by**
g) receiving input by a user to select, as image characteristic, at least one of a TV standard and a color signal type, the TV standard including NTSC, PAL and SECAM and the color signal type including RGB and sRGB;
wherein step e) comprises correcting the image information based on viewing environment information and the selected image characteristic.

5. The method as defined by claim 4, wherein step e) comprises:
e1) correcting a color correction look-up table based on the viewing environment information and the selected image characteristic;
e2) correcting a brightness correction look-up table based on the viewing environment information and the selected image characteristic; and
e3) converting the image information using said color correction look-up table and said brightness correction look-up table, and
step f) comprises displaying the input image based on the converted image information.

6. An information storage medium carrying a program of instructions executable by the computer to perform the method according to claim 4 or 5.

## Patentansprüche

1. Bildanzeigesystem, das in der Lage ist, Bildinformation, die ein in einem Anzeigebereich (12) anzuzeigendes eingegebenes Bild repräsentiert zu empfangen, die Bildinformation zu korrigieren und das eingegebene Bild auf Basis der korrigierten Bildinformation anzuzeigen, wobei das Bildanzeigesystem aufweist:
einen Kalibrierungsbild-Generatorabschnitt (150) zum Erzeugen eines Kalibrierungsbildes;
Bildanzeigemittel (190) zum Anzeigen des eingegebenen Bildes und des Kalibrierungsbildes; und
Betrachtungsumgebungs-Detektormittel (60) zum Erfassen der Tristimuluswerte des im Anzeigebereich (12) angezeigten Kalibrierungsbildes als Betrachtungsumgebungs-Information;
**gekennzeichnet durch**
Auswahleingabemittel, die auf eine Benutzereingabe reagieren, um als Bildeigenschaft einen TV-Standard und/oder einen Farbsignaltyp zu wählen, wobei der TV-Standard NTSC, PAL und SECAM und der Farbsignaltyp RGB und sRGB enthält; und
Korrekturmittel (160) zum Korrigieren der Bildinformation auf Basis der Betrachtungsumgebung s-Informationen und der gewählten Bildeigenschaft.

2. Bildanzeigesystem nach Anspruch 1, bei dem das Bildanzeigesystem ein Projektions-Anzeigegerät ist.

3. System nach Anspruch 2, ferner aufweisend:
Wandlermittel (120) zum Wandeln der Bildinformation, wobei die Wandlermittel eine Farbkorrektur-Nachschlagetabelle und eine Helligkeitskorrektur-Nachschlagetabelle aufweisen,
wobei die Bildanzeigemittel ausgebildet sind, das eingegebene Bild auf der Basis der gewandelten Bildinformation anzuzeigen, und
wobei die Korrekturmittel (160) ausgebildet sind, die Farbkorrektur-Nachschlagetabelle und die Helligkeitskorrektur-Nachschlagetabelle auf der Basis der Betrachtungsumgebungs-Informationen und der gewählten Bildeigenschaft individuell zu korrigieren.

4. Bildverarbeitungsverfahren, aufweisend:
a) Erzeugen eines Kalibrierungsbildes;
b) Anzeigen des Kalibrierungsbildes in einem Anzeigebereich (12);
c) Erfassen der Tristimuluswerte des im Anzeigebereich (12) angezeigten Kalibrierungsbildes als Betrachtungsumgebungs-Information;
d) Empfangen von Bildinformation, die ein eingegebenes Bild repräsentiert, das auf dem Anzeigebereich (12) anzuzeigen ist;
e) Korrigieren der Bildinformation; und
f) Anzeigen des eingegebenen Bildes auf der Basis der korrigierten Bildinformation;
**gekennzeichnet durch**
g) Empfangen einer benutzerseitigen Eingabe zur Wahl als Bildeigenschaft eines TV-Standards und/oder eines Farbsignaltyps, wobei der TV-Standard NTSC, PAL und SECAM und der Farbsignaltyp RGB und sRGB enthält;
wobei Schritt e) die Korrektur der Bildinformation auf der Basis der Betrachtungsumgebungs-Informationen und der gewählten Bildeigenschaft enthält.

5. Verfahren nach Anspruch 4, bei dem Schritt e) enthält:
e1) Korrigieren einer Farbkorrektur-Nachschlagetabelle auf der Basis der Betrachtungsumgebungs-Informationen und der gewählten Bildeigenschaft;
e2) Korrigieren einer Helligkeitskorrektur-Nachschlagetabelle auf der Basis der Betrachtungsumgebungs-Informationen und der gewählten Bildeigenschaft; und
e3) Wandeln der Bildinformation unter Verwendung der Farbkorrektur-Nachschlagetabelle und der Helligkeitskorrektur-Nachschlagetabelle, und bei dem
Schritt f) die Anzeige des eingegebenen Bildes auf Basis der gewandelten Bildinformation enthält.

6. Informationsspeichermedium, das ein Programm aus Anweisungen trägt, die vom Computer ausführbar sind, um das Verfahren gemäß Anspruch 4 oder 5 auszuführen.

## Revendications

1. Système d'affichage d'image conçu pour recevoir des informations d'image représentant une image d'entrée devant être affichée sur une surface d'affichage (12) pour corriger les informations d'image et afficher l'image d'entrée sur la base des informations d'image corrigées, le système d'affichage d'image comprenant :
un moyen (150) de génération d'image d'étalonnage pour générer une image d'étalonnage ;
un moyen (190) d'affichage d'image pour afficher l'image d'entrée et l'image d'étalonnage ; et
un moyen (60) de détection d'environnement de visualisation pour détecter les coordonnées trichromatiques de l'image d'étalonnage affichée sur la surface d'affichage (12) en tant qu'informations sur l'environnement de visualisation ;
**caractérisé par**
un moyen d'entrée de sélection, sensible à une entrée d'un utilisateur pour sélectionner, en tant que caractéristique de l'image, au moins l'un des types suivants, à savoir un type de norme de télévision et un type de signal de chrominance, le type de norme de télévision incluant NTSC, PAL et SECAM et le type de signal de chrominance incluant RGB et sRGB ; et
un moyen (160) de correction pour corriger les informations d'image sur la base des informations sur l'environnement de visualisation et de la caractéristique d'image sélectionnée.

2. Système d'affichage d'image selon la revendication 1, dans lequel le système d'affichage d'image est un dispositif d'affichage du type projecteur.

3. Système d'affichage d'image selon la revendication 2, comprenant en outre :
un moyen (120) de conversion pour convertir les informations d'image, le moyen de conversion incluant une table de correspondance de correction de couleur et une table de correspondance de correction de luminosité,
dans lequel le système d'affichage d'image est adapté pour afficher l'image d'entrée sur la base des informations d'image converties, et
dans lequel le moyen (160) de correction est adapté pour corriger individuellement la table de correspondance de correction de couleur et la table de correspondance de correction de luminosité sur la base des informations sur l'environnement de visualisation et de la caractéristique d'image sélectionnée.

4. Procédé de traitement d'image comprenant :
a) la génération d'une image d'étalonnage ;
b) l'affichage de l'image d'étalonnage sur une surface d'affichage (12) ;
c) la détection des coordonnées trichromatiques de l'image d'étalonnage affichée sur la surface d'affichage (12) comme des informations sur l'environnement de visualisation ;
d) la réception des informations d'image représentant une image d'entrée devant être affichée sur la surface d'affichage (12) ;
e) la correction des informations d'image ; et
f) l'affichage de l'image d'entrée sur la base des informations d'image corrigées ;
**caractérisé par**
g) la réception d'une entrée effectuée par un utilisateur pour sélectionner, en tant que caractéristique de l'image, au moins l'un des types suivants, à savoir un type de norme de télévision et un type de signal de chrominance, le type de norme de télévision incluant NTSC, PAL et SECAM et le type de signal de chrominance incluant RGB et sRGB ;
dans lequel l'étape e) comprend la correction des informations d'image sur la base des informations sur l'environnement de visualisation et de la caractéristique d'image sélectionnée.

5. Procédé selon la revendication 4, dans lequel l'étape e) comprend :
e1) la correction d'une table de correspondance de correction de couleur sur la base des informations sur l'environnement de visualisation et de la caractéristique d'image sélectionnée ;
e2) la correction d'une table de correspondance de correction de luminosité sur la base des informations sur l'environnement de visualisation et de la caractéristique d'image sélectionnée ; et
e3) la conversion des informations d'image en utilisant la table de correspondance de correction de couleur et la table de correspondance de correction de luminosité, et
l'étape f) comprend l'affichage de l'image d'entrée sur la base des informations d'image converties.

6. Support de stockage d'informations contenant un programme composé d'instructions exécutables par l'ordinateur pour exécuter le procédé selon la revendication 4 ou 5.
